# FASCICULE DE BREVET EUROPEEN

(11) **EP 0 711 689 B1**
(45) Date de publication et mention de la délivrance du brevet: **27.01.1999**
(21) Numéro de dépôt: 95402446.9
(22) Date de dépôt: 03.11.1995
(51) Int. Cl.: B60S 1/16

(54) **Motoréducteur comprenant un carter creux muni d'une plaque de fermeture, notamment pour un dispositif d'essuie-glace de véhicule**
Getriebemotor mit einem hohlen, mit einem Verschlussdeckel versehenen Gehäuse, insbesondere für Kraftfahrzeug-Scheibenmischeranlage
Geared motor having a hollow housing equipped with a closure plate, especially for a vehicle windscreen wiper device

(30) Priorité: 08.11.1994 FR 9413632
(43) Date de publication de la demande: 15.05.1996
(73) Titulaire: VALEO SYSTEMES D'ESSUYAGE, 78321 La Verrière (FR)
(72) Inventeur: Gagneux, Georges, F-86100 Chatellerault (FR)
(74) Mandataire: Gamonal, Didier

(56) Documents cités:
- EP-A- 0 479 673
- EP-A- 0 498 949
- FR-A- 2 552 723

## Description

La présente invention se rapporte à un motoréducteur comprenant un carter creux muni d'une plaque de fermeture, notamment pour un dispositif d'essuie-glace de véhicule.

Comme cela est connu, un tel dispositif comprend généralement un moteur électrique d'entraînement et un mécanisme réducteur, notamment un mécanisme à vis sans fin enfermé dans un carter creux muni d'une plaque de fermeture. Un dispositif selon les caractéristiques du préambule de la revendication 1 est connu par exemple du document EP-A-479673.

Ce carter comporte dans son volume creux, une roue dentée entraînée en rotation par la vis sans fin et actionnant, par l'intermédiaire d'un pion excentré porté par ladite roue, un système bielle-manivelle commandant, dans un mouvement de rotation alternatif, un arbre de sortie traversant le fond du carter pour mettre en mouvement un dispositif d'essuyage.

L'arbre de sortie est relié de manière classique à au moins un essuie-glace constitué d'un bras et d'un balai qui va balayer un certain secteur angulaire sur le pare-brise ou sur la lunette arrière du véhicule.

Du fait de l'évolution des pare-brise qui deviennent de plus en plus panoramiques et inclinés, la taille des essuie-glaces doit augmenter et par conséquent, leur poids augmente également. D'autre part, l'angle de balayage parcouru par les essuie-glaces est de plus en plus important et peut maintenant atteindre 180 degrés, en particulier dans le cas de l'essuyage de la lunette arrière du véhicule.

Ceci amène un certain nombre de problèmes au niveau du système d'entraînement de l'essuie-glace, en particulier des à-coups lorsque le balai d'essuie-glace atteint ses positions extrêmes de balayage.

En effet, lorsque l'essuie-glace balaie une zone allant de sa position de parcage à une position à 90 degrés de cette dernière, le mouvement du balai d'essuie-glace est relativement régulier. Par contre, quand l'essuie-glace dépasse cette zone et parcourt un secteur angulaire situé au delà de 90 degrés par rapport à sa position de parcage, de par l'inertie emmagasinée par ledit essuie-glace, celui-ci devient un élément moteur par rapport au motoréducteur et son mouvement a tendance à s'accélérer ce qui peut générer des à-coups au moment où le balai d'essuie-glace atteint sa position extrême de balayage et qu'il revient vers sa position de parcage.

Ces à-coups produisent des bruits et des irrégularités dans l'essuyage qui peuvent être désagréables pour l'utilisateur d'un tel dispositif et que l'on cherche à éviter.

On a déjà proposé des solutions pour limiter les à-coups dans les positions extrêmes de balayage. Par exemple, le document DE-A-39 20 731 présente des butées de fin de course basées sur le principe suivant.

Un membre d'arrêt de forme annulaire entoure l'arbre de sortie et est lié à celui-ci en rotation. Il est muni d'une patte coulissant dans une gorge entourant l'arbre de sortie, ladite gorge comportant à ses deux extrémités correspondant aux positions extrêmes de balayage, des éléments élastiques dans lesquels vient buter la patte du membre d'arrêt lorsque l'essuie-glace atteint ses positions extrêmes.

Un inconvénient de cette solution est qu'elle implique de rajouter au dispositif réducteur plusieurs pièces de forme élaborée ce qui complique la fabrication de ce dernier.

Un autre inconvénient du dispositif précédemment décrit vient du fait que l'amortissement du balai d'essuie-glace n'est pas progressif avec ledit dispositif car les butées de fin de course n'empêchent pas l'accélération du balais lorsqu'il parcourt un secteur angulaire situé au delà de 90 degrés par rapport à sa position de parcage.

On se propose donc de trouver un moyen simple et économique d'assurer un essuyage régulier, et sans à-coups dans les positions de fin de course du balai d'essuie-glace.

Dans ce but, la présente invention propose un motoréducteur, comprenant un carter creux muni d'une plaque de fermeture, notamment pour un dispositif d'essuie-glace de véhicule, comportant, dans le volume creux dudit carter, une roue dentée, mobile en rotation autour d'un axe, portant un pion parallèle à l'axe et excentré par rapport à celui-ci, qui entraîne un système bielle-manivelle, articulé autour d'un pivot, ledit système bielle-manivelle permettant d'entraîner un arbre de sortie, relié à l'extrémité de la manivelle, dans un mouvement de rotation alternatif, caractérisé en ce que la plaque de fermeture présente, sur sa face interne dirigée vers le carter, une surépaisseur de guidage de l'extrémité du pivot sur au moins une partie de son cheminement autour de l'arbre de sortie, ladite surépaisseur présentant deux butées élastiques adaptées à entrer en contact alternativement avec ledit pivot.

Selon un autre aspect de l'invention, la surépaisseur de guidage de l'extrémité du pivot comprend au moins un bras déformable élastiquement.

Selon un autre aspect de l'invention, la surépaisseur de guidage de l'extrémité du pivot comprend deux bras déformables élastiquement formant une fente en arc de cercle.

Selon d'autres caractéristiques de l'invention,
- la fente en arc de cercle présente à ses deux extrémités, dans son prolongement, des fentes de souplesse, de longueur inférieure à la longueur totale de ladite fente, de largeur inférieure à la largeur minimale de ladite fente et adaptées à être déformées élastiquement,
- les butées élastiques sont formées, aux deux extrémités de la fente en arc de cercle, par la différence entre la largeur de ladite fente en arc de cercle et celle desdites fentes de souplesse,
- la largeur de la fente en arc de cercle, prise entre les bras déformables élastiquement, est maximum au centre de ladite fente et diminue en allant vers les butées situées aux extrémités de ladite fente en arc de cercle,
- la largeur maximale de ladite fente est sensiblement égale au diamètre du pivot,
- le motoréducteur comporte en outre un joint périphérique, disposé entre le bord supérieur du carter dudit motoréducteur et la plaque de fermeture, et formant avec ladite surépaisseur de guidage de l'extrémité du pivot une pièce monobloc,
- ladite pièce monobloc comporte une plaquette plane, centrée sur l'axe de la roue dentée, en appui sur la face interne de la plaque de fermeture, et adaptée de manière à ce que la surface supérieure située à l'extrémité du pion soit en contact glissant avec ladite plaquette,
- ladite plaquette comporte deux surépaisseurs, faisant saillie vers l'intérieur dudit carter, en forme de cercles concentriques centrés sur l'axe de la roue dentée, et adaptées de manière à ce que l'extrémité du pion soit maintenue serrée entre lesdites surépaisseurs pendant tout le mouvement circulaire du pion autour dudit axe.

D'autres caractéristiques et avantages apparaîtront à la lecture de la description suivante en se référant aux dessins annexés parmi lesquels:
- la figure 1 est une vue en élévation d'un moto-réducteur selon un premier mode de réalisation de l'invention, dans laquelle on considère que la plaque de fermeture est transparente;
- la figure 2 est une vue, selon une coupe A, du moto-réducteur de la figure 1;
- la figure 3 est une vue en élévation de la pièce dénommée joint-butée dans laquelle s'intègre la fente en arc de cercle avec les butées d'amortissement;
- la figure 4 est une vue en élévation d'un motoréducteur selon un deuxième mode de réalisation de l'invention; et
- la figure 5 est une vue, selon une coupe B, du moto-réducteur de la figure 4.

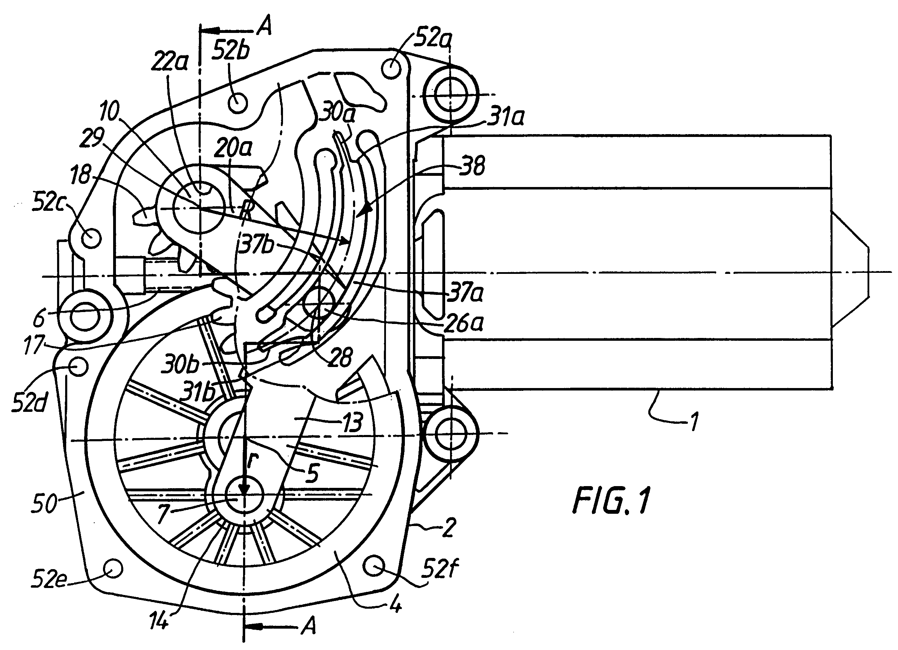

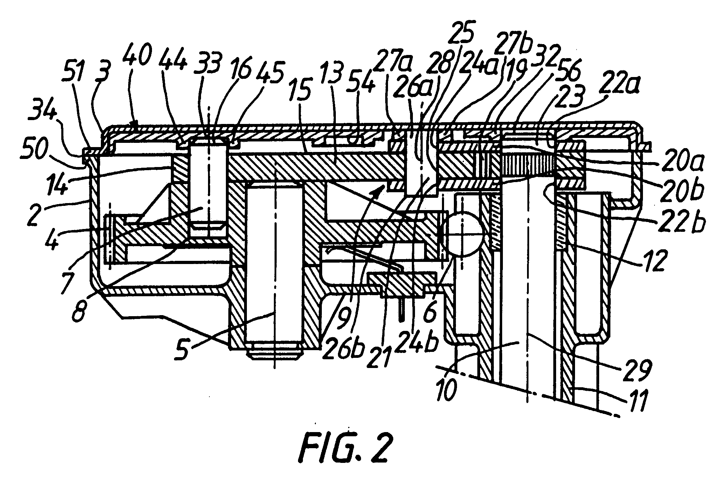

Sur les figures 1 et 2, on a représenté un motoréducteur, notamment pour l'entraînement d'un système d'essuyage, comprenant un moteur électrique 1 et un carter creux 2 muni d'une plaque de fermeture 3. Ce carter contient un système de réduction constitué d'une roue dentée 4 mobile en rotation autour d'un axe 5 et entraînée par une vis sans fin 6 issue du rotor du moteur électrique 1.

La roue 4 porte un pion 7, parallèle à l'axe 5 et sensiblement excentré par rapport à celui-ci, monté libre en rotation dans un logement 8 de la roue 4.

Le pion 7 est relié à un système bielle-manivelle 9 qui permet de transformer le mouvement de rotation de ladite roue 4 en mouvement de rotation alternatif à un arbre de sortie 10. Ledit arbre de sortie 10 est logé dans un fût 11 situé au fond du carter 2 en reposant sur un palier 12.

Le système bielle-manivelle 9 est composé d'un bras 13 formant bielle, relié à l'une 14 de ses extrémités au pion 7 en laissant dépasser, au delà de sa face externe 15, un tronçon d'extrémité 16 du pion 7, et présentant à l'autre extrémité un secteur denté 17. Ce secteur denté s'engrène en 19 avec un autre secteur denté 18, lié de manière fixe à l'arbre de sortie 10.

Les deux secteurs dentés 17 et 18 sont maintenus constamment en prise grâce à deux balanciers 20a et 20b, situés de part et d'autre des faces longitudinales desdits secteurs dentés, en formant une manivelle et en permettant de relier rigidement le bras 13 et l'arbre de sortie 10. Ces deux balanciers sont maintenus ensembles, d'une part par l'intermédiaire d'une ouverture 22a (pour le balancier 20a) et 22b (pour le balancier 20b) prévue à une extrémité desdits balanciers et qui vient entourer l'extrémité 23 de l'arbre de sortie 10, et d'autre part par un pivot 21, libre en rotation, disposé à l'autre extrémité desdits balanciers.

Les deux balanciers ont ainsi un mouvement de rotation alternatif autour de l'arbre de sortie 10.

Comme mieux visible à la figure 2, le pivot 21 est une pièce cylindrique tournant dans l'alésage 25 du bras 13 et emmanchée à force dans les alésages 26a et 26b des balanciers 20a et 20b.

La dimension axiale du pivot 21 est supérieure à l'épaisseur réunie des deux balanciers 20a et 20b et du bras 13 de manière à dégager deux extrémités 26a et 26b qui dépassent de part et d'autre desdits balanciers.

En considérant la figure 2, le carter 2 est fermé à sa partie supérieure par une plaque de fermeture 3, généralement réalisée à partir d'une feuille métallique de faible épaisseur, et reliée aux bords dudit carter par tous moyens connus tel que serrage par vis ou rivetage.

Cette plaque de fermeture présente, sur sa face interne, une surépaisseur 27a, 27b entourant l'extrémité 26a du pivot 21 et formant deux bras concentriques à l'arbre de sortie 37a et 37b comme mieux visible sur la figure 1.

Cette surépaisseur 27a, 27b, qui est rapportée, en appui, sur ladite plaque de fermeture, est en un matériau plastique à faible coefficient de frottement et elle est disposée de telle sorte que l'extrémité 26a soit maintenue serrée entre les parties 27a et 27b de ladite surépaisseur.

Il est en outre prévu que les bras concentriques 37a et 37b soient d'une épaisseur telle que cette surépaisseur 27a, 27b soit en contact avec la surface supérieure du balancier 20a comme mieux visible sur la figure 2.

Les deux bras concentriques 37a et 37b forment une fente en arc de cercle 38 dans laquelle peut glisser l'extrémité 26a du pivot 21. Pour cela, le rayon R du cercle servant de support à l'arc de cercle formant ladite fente 38 est sensiblement égal à la distance comprise entre l'axe 29 de l'arbre de sortie 10 et l'axe 28 du pivot 21. De plus, l'épaisseur desdits bras concentriques 37a, 37b est prévue pour que la surface supérieure, celle tournée vers la plaque de fermeture 3, de l'extrémité 26a du pivot 21 ne touche pas ladite plaque de fermeture, évitant ainsi d'éventuels frottements.

La fente en arc de cercle 38 présente à ses deux extrémités, dans son prolongement, des fentes 30a et 30b de longueur très inférieure à la longueur totale de la fente 38, et de largeur inférieure à la largeur minimale de ladite fente en arc de cercle 38.

La différence des largeurs entre la fente principale en arc de cercle 38 et les fentes 30a et 30b situées aux extrémités de ladite fente 38 forme deux butées 31a et 31b qui sont adaptées de telle sorte que l'extrémité 26a du pivot 21 vienne buter sur lesdites butées 31a, 31b lorsque le balai d'essuie-glace atteint ses positions extrêmes de balayage.

En effet, le mouvement de rotation alternatif des balanciers 20a, 20b autour de l'arbre 10 correspond au mouvement alternatif du ou des balais d'essuie-glace sur le pare-brise ou la lunette arrière du véhicule et lorsque ledit balai atteint ses positions extrêmes de balayage, le pivot 21, et en particulier son extrémité 26a, atteint les extrémités de la fente en arc de cercle 38.

D'autre part, la fente en arc de cercle 38 a une largeur, correspondant à la distance entre les deux bras concentriques 37a et 37b, qui n'est pas constante. En effet, la distance entre les deux bras 37a et 37b est sensiblement égale au diamètre du pivot 21 au centre de ladite fente 38, et elle diminue en allant vers les extrémités 31a et 31b de ladite fente 38.

Ainsi, au niveau de ses extrémités 31a et 31b la largeur de la fente 38 est inférieure au diamètre du pivot 21. Pour que ledit pivot puisse venir buter sur les butées 31a et 31b, il faut donc que les bras concentriques 37a et 37b soient déformables de manière à s'écarter pour augmenter la largeur de la fente au niveau du passage dudit pivot.

Cette déformation élastique des bras concentriques 37a, 37b est possible grâce aux fentes de souplesse 30a et 30b qui peuvent s'ouvrir pour permettre l'écartement desdits bras concentriques 37a, 37b.

Sur la figure 1, la fente 30b est d'ailleurs représentée en position ouverte car l'extrémité 26a du pivot 21 a presque atteint la butée 31b. Par contre, la fente 30a, située à l'autre extrémité de la fente 38 est représentée fermée puisque le pivot 21 n'écarte pas les bras concentriques 37a, 37b à cette extrémité de ladite fente 38.

La fente en arc de cercle 38 a une fonction d'amortissement progressif du mouvement du pivot 21 lorsque celui-ci glisse du centre de la fente vers les extrémités, puisque l'extrémité 26a dudit pivot doit exercer une force pour écarter les bras concentriques 37a, 37b qui va en augmentant lorsque le pivot se dirige vers les butées 31a, 31b.

Ainsi, le mouvement du balai d'essuie-glace est également amorti de manière progressive lorsque ledit balai se dirige vers les positions extrêmes d'essuyage, c'est à dire dans les moments où le poids du balai aurait tendance à provoquer une accélération du mouvement d'essuyage. Ce dispositif permet donc d'assurer une grande régularité dans l'essuyage.

D'autre part, les butées 31a et 31b de la fente 38 sont disposées de telle sorte que les secteurs dentés 17 et 18 coopèrent en permanence l'un avec l'autre lorsque l'extrémité du pivot glisse dans ladite fente 38 d'une butée à l'autre. Ainsi, lors des changements de sens de balayage, le changement de sens de l'engrenage desdits secteurs dentés se fait sans à-coup et donc sans bruit.

Dans l'exemple présenté sur la figure 2, la face interne de la plaque de fermeture 3 présente, en plus de la surépaisseur 27a, 27b, des surépaisseurs 32, 33, 44 et 45.

Ces surépaisseurs sont parties intégrantes d'une pièce 40 comprenant un joint 34 placé entre le bord du carter 2 et le bord de la plaque de fermeture 3.

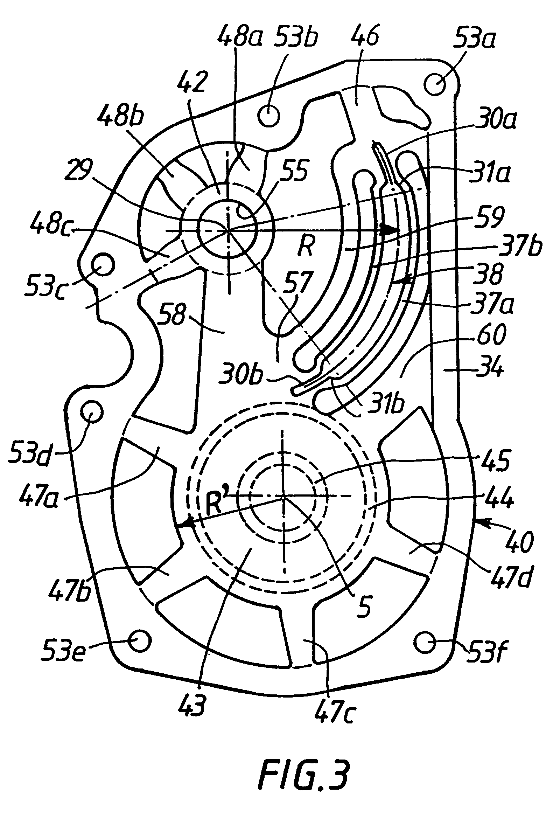

A la figure 3, on a représenté un mode de réalisation de la pièce 40, que nous désignerons par joint-butée. Ladite pièce 40 comprend un joint 34 disposé à la périphérie de celle-ci, une plaquette plane 43 de forme circulaire présentant deux surépaisseurs 44, 45 en forme de cercles concentriques, centrés sur le centre de ladite plaquette circulaire, une rondelle 42 et la fente en arc de cercle 37a, 37b, 38.

Ce joint-butée 40 est en un matériau à faible coefficient de frottement et il est prévu qu'il soit positionné en appui sur la plaque de fermeture 3, le joint 34 étant situé entre le bord supérieur 50 du carter 2 et le bord 51 de la plaque de fermeture 3 comme mieux visible sur la figure 2.

Ce joint 34 a une forme calquée sur celle du bord supérieur 50 du carter 2, en se référant à la figure 1, et à des perçages 52a-52f situés sur ledit bord supérieur 50 correspondent des perçages 53a-53f du joint 34 (visibles à la figure 3), ces perçages servant à relier ensemble le carter 2 et la plaque de fermeture 3, au moyen de vis ou de rivets par exemple.

Le joint 34 se glisse ainsi exactement à la jointure de la plaque de fermeture 3 et du carter 2 et il assure une liaison étanche de ces deux éléments. Il empêche en effet de la graisse ou des poussières de pénétrer à l'intérieur du carter.

En relation avec la figure 3, la plaquette 43 présente une forme périphérique circulaire dont le rayon R' est supérieur au rayon r considéré entre l'axe 5 de rotation de la roue 4 et l'axe du pion 7 (visible à la figure 1), augmenté du rayon du pion 7. Ladite plaquette est placée coaxialement avec l'axe 5 et en appui sur la plaque de fermeture 3.

Les surépaisseurs 44 et 45 de ladite plaquette 43 font saillie vers l'intérieur du carter du motoréducteur et ont la forme de cercles, centrés sur l'axe 5 de la roue 4.

Le rayon de la surépaisseur 44 est sensiblement égal au rayon r additionné du rayon du pion 7 et le rayon de la surépaisseur 45 est sensiblement égal au rayon r auquel le rayon du pion 7 a été soustrait.

Ces deux surépaisseurs 44, 45 sont adaptées de manière à ce que l'extrémité 16 du pion 7 soit maintenue serrée entre lesdites surépaisseurs pendant tout le mouvement circulaire du pion 7 autour de l'axe 5 et il est prévu que, lors du montage et du vissage de la plaque de fermeture 3 sur le bord 50 du carter, la plaquette 43 vienne porter à glissement sur la surface supérieure située à l'extrémité 16 du pion 7.

Ainsi, l'extrémité 16 du pion 7 est maintenue axialement et radialement tout au long du mouvement circulaire dudit pion 7 autour de l'axe 5 ce qui confère une grande régularité audit mouvement.

En se référant à la figure 3, la rondelle évidée 42 présente un alésage 55 de diamètre sensiblement supérieur au diamètre de l'extrémité 23 de l'arbre de sortie 10. Elle est disposée coaxialement avec l'axe 29 de l'arbre de sortie 10 de manière à venir entourer l'extrémité 23 en prenant appui, sur le balancier 20a d'une part, et sur la plaque de fermeture d'autre part, lorsque cette dernière est mise en place sur le carter 2, comme mieux visible sur la figure 2.

Bien entendu, il est prévu un espace entre la surface terminale 56 de l'extrémité 23 de l'arbre de sortie et la surface interne, celle dirigée vers l'intérieur du carter 2, de la plaque de fermeture 3, lorsque cette dernière est mise en place sur ledit carter. La surépaisseur 32 sera prévue pour être d'une épaisseur suffisante pour que l'extrémité 23 de l'arbre 10 ne vienne pas en contact avec la face interne de la plaque de fermeture 3.

Ainsi, l'arbre de sortie 10 est immobilisé en translation axiale grâce à la surépaisseur 32, mais aussi tous mouvements radiaux de la portion d'arbre 10 située au delà du palier 12 sont empêchés par la disposition de l'extrémité 23 dans l'alésage 55 de la rondelle 42 servant dans ce cas de palier radial.

Le joint-butée 40 permet donc d'avoir une pièce unique assurant les fonctions:
- d'amortissement du mouvement des balanciers formant manivelle et donc du mouvement du ou des balais d'essuie-glace, et de butée de fin de course desdits balais, grâce à la fente en arc de cercle 38 et aux butées 31a et 31b,
- d'étanchéité à la graisse et à la poussière de la liaison carter 2/plaque de fermeture 3 grâce au joint 34,
- d'appui et de maintien radial au niveau de l'arbre de sortie 10 grâce à la rondelle 42,
- d'appui et de guidage du pion 7 porté par la roue 4 grâce à la plaquette 43 et à ses deux surépaisseurs circulaires 44 et 45,
- et d'appui et de guidage de l'extrémité du balancier formant manivelle pour éviter son arc-boutement grâce aux surépaisseurs 27a, 27b.

En pratique, et comme cela est visible sur la figure 3, la fente en arc de cercle 37a, 37b, 38 est reliée au joint 34 par une languette 46, la plaquette 43 est reliée au joint 34 par une pluralité de languettes 47a-47d et la rondelle 42 est reliée au joint 34 par des languettes 48a-48c. De plus la fente en arc de cercle 38 est reliée à la plaquette 43 en une jonction 57 et un bras 58 relie entre elles la rondelle 42 et la plaquette 43.

Un bras 59 reliant la languette 46 à la jonction 57 et un bras 60 reliant la plaquette 43 au joint 34 au voisinage de la fente 38 contribuent à rigidifier l'ensemble joint-butée autour de la fente en arc de cercle 38, ladite fente 38 devant, comme on l'a vu plus haut, être déformable élastiquement.

Ainsi, le joint-butée 40 est une pièce monobloc pouvant être par exemple moulée.

Bien entendu, il est possible de ne pas relier ensembles dans une même pièce les éléments: fente en arc de cercle 38, plaquette 43, rondelle 42 et joint 34, par exemple en fixant directement l'un ou plus de ces éléments sur la face interne de la plaque de fermeture 3 au moyen de picots ou par tout autre moyen connu.

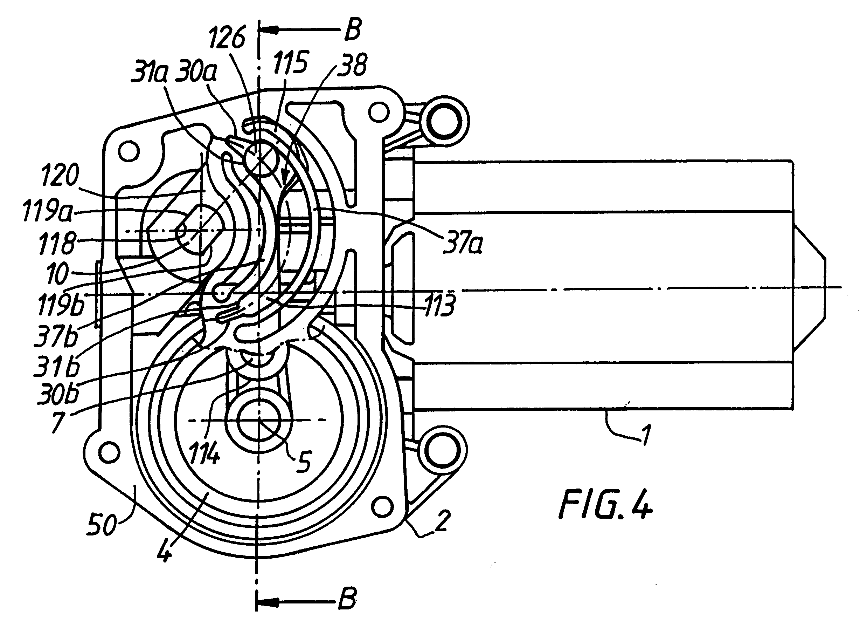

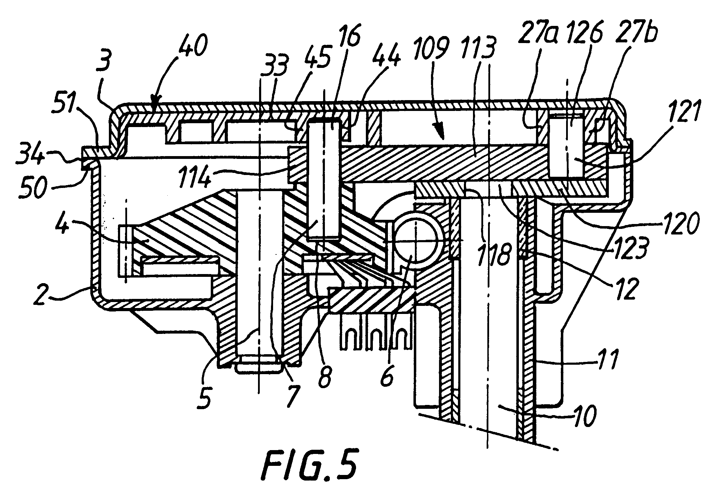

Sur les figures 4 et 5, on a représenté un motoréducteur similaire à celui déjà décrit aux figures 1 et 2 mais dans lequel le mécanisme bielle-manivelle ne comporte pas de secteurs dentés s'engrenant l'un avec l'autre.

Les éléments similaires à ceux précédemment décrits portent les mêmes numéros de référence et ne seront pas décrits plus avant.

Le système bielle-manivelle 109 est composé d'un premier bras 113 formant bielle et relié, à l'une 114 de ses extrémités, au pion 7 porté par la roue dentée 4, et à l'autre extrémité 115 à un deuxième bras 120 formant manivelle par l'intermédiaire d'un pivot 121.

Ce deuxième bras 120 est lié en rotation à l'arbre de sortie 10 du réducteur grâce à la coopération de la forme de l'alésage 118 dudit bras 120, comportant deux méplats 119a et 119b, avec celle de l'extrémité 123 dudit arbre de sortie 10.

Ce système bielle-manivelle transforme donc le mouvement de rotation continue de la roue dentée 4 en un mouvement de rotation alternatif du pivot 121 autour de l'arbre 10.

En considérant la figure 5, l'extrémité supérieure 126 du pivot 121 dépasse d'une certaine hauteur au dessus de la surface supérieure du bras 113 de la manivelle et ladite extrémité est guidée en étant serrée dans la fente en arc de cercle 38 tout en amortissant le mouvement du bras 120 formant manivelle selon le même principe que celui qui a déjà été exposé dans la description des figures 1 et 2.

Ainsi, le mouvement du ou des balais d'essuie-glace, liés à l'arbre de sortie 10, est amorti lorsque ledit ou lesdits balais atteignent leurs positions extrêmes de balayage et les à-coups en fin de course dudit ou desdits balais sont supprimés.

Il est bien entendu que la description donnée ci-dessus du dispositif n'est aucunement limitative et pourra donner lieu à toute modification désirable sans sortir pour cela du cadre de l'invention.

Notamment dans le cas où la plaque de fermeture 3 est en matériau plastique, il peut être prévu que la fente 38 de guidage et d'amortissement élastique de l'extrémité 26a, 126 du pivot 21, 121 soit monobloc avec ladite plaque de fermeture.

## Revendications

1. Motoréducteur comprenant un carter creux (2) muni d'une plaque de fermeture (3), notamment pour un dispositif d'essuie-glace de véhicule, comportant, dans le volume creux dudit carter, une roue dentée (4), mobile en rotation autour d'un axe (5), portant un pion (7) parallèle à l'axe (5) et excentré par rapport à celui-ci, qui entraîne un système bielle (13, 17; 113) - manivelle (20a, 20b; 120), articulé autour d'un pivot (21; 121), ledit système bielle-manivelle permettant d'entraîner un arbre de sortie (10), relié à l'extrémité de la manivelle (20a, 20b; 120), dans un mouvement de rotation alternatif, caractérisé en ce que la plaque de fermeture (3) présente, sur sa face interne dirigée vers le carter (2), une surépaisseur (27a, 27b) de guidage de l'extrémité (26a; 126) du pivot (21; 121) sur au moins une partie de son cheminement autour de l'arbre de sortie (10), ladite surépaisseur présentant deux butées (31a, 31b) élastiques adaptées à entrer en contact alternativement avec ledit pivot (21; 121).

2. Motoréducteur selon la revendication 1, caractérisé en ce que la surépaisseur (27a, 27b) de guidage de l'extrémité (26a; 126) du pivot comprend au moins un bras (37a, 37b) déformable élastiquement.

3. Motoréducteur selon l'une des revendications 1 ou 2, caractérisé en ce que la surépaisseur (27a, 27b) de guidage de l'extrémité (26a; 126) du pivot comprend deux bras (37a, 37b) déformables élastiquement formant une fente (38) en arc de cercle.

4. Motoréducteur selon la revendication 3, caractérisé en ce que la fente (38) en arc de cercle présente à ses deux extrémités, dans son prolongement, des fentes de souplesse (30a, 30b), de longueur inférieure à la longueur totale de ladite fente (38), de largeur inférieure à la largeur minimale de ladite fente (38) et adaptées à être déformées élastiquement.

5. Motoréducteur selon la revendication 4, caractérisé en ce que les butées (31a, 31b) élastiques sont formées, aux deux extrémités de la fente (38) en arc de cercle, par la différence entre la largeur de ladite fente (38) en arc de cercle et celle desdites fentes de souplesse (30a, 30b).

6. Motoréducteur selon l'une des revendications 3, 4 ou 5, caractérisé en ce que la largeur de la fente (38) en arc de cercle, prise entre les bras (37a, 37b) déformables élastiquement, est maximum au centre de ladite fente et diminue en allant vers les butées (31a, 31b) situées aux extrémités de ladite fente (38) en arc de cercle.

7. Motoréducteur selon la revendication 6, caractérisé en ce que la largeur maximale de ladite fente (38) est sensiblement égale au diamètre du pivot (21).

8. Motoréducteur selon l'une des revendications précédentes, caractérisé en ce qu'il comporte en outre un joint périphérique (34), disposé entre le bord supérieur (50) du carter dudit motoréducteur et la plaque de fermeture (3), et formant avec ladite surépaisseur (27a, 27b) de guidage de l'extrémité du pivot une pièce monobloc (40).

9. Motoréducteur selon la revendication 8, caractérisé en ce que la pièce monobloc (40) comporte une plaquette plane (43), centrée sur l'axe (5) de la roue dentée (4), en appui sur la face interne de la plaque de fermeture (3), et adaptée de manière à ce que la surface supérieure située à l'extrémité (16) du pion (7) soit en contact glissant avec ladite plaquette (43).

10. Motoréducteur selon la revendication 9, caractérisé en ce que ladite plaquette (43) comporte deux surépaisseurs (44, 45), faisant saillie vers l'intérieur dudit carter (2), en forme de cercles concentriques centrés sur l'axe (5) de la roue denté, et adaptées de manière à ce que l'extrémité (16) du pion (7) soit maintenue serrée entre lesdites surépaisseurs pendant tout le mouvement circulaire du pion (7) autour de l'axe (5).

## Claims

1. A motorised, speed-reducing drive unit comprising a hollow casing (2) having a closure plate (3), especially for a vehicle screen wiping apparatus, comprising, within the hollow interior of the said casing, a toothed wheel (4) rotatable about an axis (5), carrying a pin (7) parallel to the axis (5) and eccentric with respect to the latter, which drives a system comprising a connecting rod (13, 17; 113) and a crank (20a, 20b; 120), articulated about a pivot (21; 121), the said connecting rod and crank system driving in alternating rotary motion an output shaft (10) coupled to the end of the crank (20a, 20b; 120), characterised in that the closure plate (3) has, on its internal face facing towards the casing (2), a thickened portion (27a, 27b) for guiding the end (26a; 126) of the pivot (21; 121) over at least part of its travel about the output shaft (10), the said thickened portion having two elastic abutments (31a, 31b) adapted to make alternate contact with the said pivot (21; 121).

2. A drive unit according to Claim 1, characterised in that the thickened portion (27a, 27b) for guiding the end (26a; 126) of the pivot comprises at least one elastic deformable arm (37a, 37b).

3. A drive unit according to Claim 1 or Claim 2, characterised in that the thickened portion (27a, 27b) for guiding the end (26a; 126) of the pivot comprises two resiliently deformable arms (37a, 37b) defining a circular arcuate slot (38).

4. A drive unit according to Claim 3, characterised in that the arcuate slot (38) has, extending its two ends, flexing slots (30a, 30b), the length of which is less than the total length of the said slot (38) and the width of which is smaller than the smallest width of the said slot (38), and which are adapted to be deformed elastically.

5. A drive unit according to Claim 4, characterised in that the elastic abutments (31a, 31b) are defined at the two ends of the arcuate slot (38) by the difference between the width of the said arcuate slot (38) and that of the said flexing slots (30a, 30b).

6. A drive unit according to one of Claims 3, 4 or 5, characterised in that the width of the arcuate slot (38), measured between the resiliently deformable arms (37a, 37b), is a maximum at the centre of the said slot and diminishes towards the abutments (31a, 31b) situated at the ends of the said arcuate slot (38).

7. A drive unit according to Claim 6, characterised in that the maximum width of the said slot (38) is substantially equal to the diameter of the pivot (21).

8. A drive unit according to one of the preceding Claims, characterised in that it further includes a peripheral seal (34) disposed between the upper edge (50) of the casing of the said drive unit and the closure plate (3), and constituting a monobloc component (40) with the said thickened portion (27a, 27b) for guiding the end of the pivot.

9. A drive unit according to Claim 8, characterised in that the monobloc component (40) comprises a flat plate portion (43), centred on the axis (5) of the toothed wheel (4) and in engagement on the internal face of the closure plate (3), and adapted so that the upper surface situated at the end (16) of the pin (7) is in sliding contact with the said plate portion (43).

10. A drive unit according to Claim 9, characterised in that the said plate portion (43) has two thickened portions (44, 45) projecting towards the interior of the said casing (2) and being in the form of concentric circles centred on the axis (5) of the toothed wheel, being adapted so that the end (16) of the pin (7) is held fast between the said thickened portions over the whole circular motion of the pin (7) about the axis (5).

## Patentansprüche

1. Getriebemotor mit einem hohlen, mit einem Verschlußdeckel (3) versehenen Gehäuse (2), insbesondere für eine Kraftfahrzeug-Scheibenwischeranlage, der im Hohlraum des besagten Gehäuses ein um eine Achse (5) drehbewegliches Zahnrad (4) umfaßt, das einen parallel zur Achse (5) und im Verhältnis zu dieser außermittig angeordneten Stift (7) trägt, der einen Kurbeltrieb mit Gelenkstange (13, 17; 113) und Kurbel (20a, 20b; 120) antreibt, der um einen Gelenkzapfen (21; 121) angelenkt ist, wobei der besagte Kurbeltrieb den Antrieb einer mit dem Ende der Kurbel (20a, 20b; 120) verbundenen Ausgangswelle (10) in einer Pendeldrehbewegung ermöglicht , **dadurch gekennzeichnet,** daß die Verschlußplatte (3) auf ihrer zum Gehäuse (2) gerichteten Innenfläche eine Erhebung (27a, 27b) zur Führung des Endes (26a; 126) des Gelenkzapfens (21; 121) auf mindestens einem Teil seiner Bahn um die Ausgangswelle (10) aufweist, wobei die besagte Erhebung zwei elastische Anschläge (31a, 31b) aufweist, die wechselweise mit dem besagten Gelenkzapfen (21; 121) in Berührung kommen können.

2. Getriebemotor nach Anspruch 1, **dadurch gekennzeichnet,** daß die Erhebung (27a, 27b) zur Führung des Endes (26a; 126) des Gelenkzapfens mindestens einen elastisch verformbaren Arm (37a, 37b) umfaßt.

3. Getriebemotor nach einem der Ansprüche 1 oder 2, **dadurch gekennzeichnet,** daß die Erhebung (27a, 27b) zur Führung des Endes (26a; 126) des Gelenkzapfens zwei elastisch verformbare Arme (37a, 37b) umfaßt, die einen kreisbogenförmigen Schlitz (38) bilden.

4. Getriebemotor nach Anspruch 3, **dadurch gekennzeichnet,** daß der kreisbogenförmige Schlitz (38) an seinen beiden Enden, in seiner Verlängerung, Biegsamkeitsschlitze (30a, 30b) aufweist, mit einer Länge, die kleiner als die Gesamtlänge des besagten Schlitzes (38) ist, mit einer Breite, die kleiner als die minimale Breite des besagten Schlitzes (38) ist, und die sich elastisch verformen können.

5. Getriebemotor nach Anspruch 4, **dadurch gekennzeichnet,** daß die elastischen Anschläge (31a, 31b) an den beiden Enden des kreisbogenförmigen Schlitzes (38) durch den Unterschied zwischen der Breite des besagten kreisbogenförmigen Schlitzes (38) und der Breite der besagten Biegsamkeitsschlitze (30a, 30b) gebildet sind.

6. Getriebemotor nach einem der Ansprüche 3, 4 oder 5, **dadurch gekennzeichnet,** daß die Breite des kreisbogenförmigen Schlitzes (38), zwischen den elastisch verformbaren Armen (37a, 37b), in der Mitte des besagten Schlitzes maximal ist und sich allmählich zu den Anschlägen (31a, 31b) hin verringert, die an den Enden des besagten kreisbogenförmigen Schlitzes (38) angeordnet sind.

7. Getriebemotor nach Anspruch 6, **dadurch gekennzeichnet,** daß die maximale Breite des besagten Schlitzes (38) in etwa gleich dem Durchmesser des Gelenkzapfens (21) ist.

8. Getriebemotor nach einem der vorangehenden Ansprüche**,dadurch gekennzeichnet,** daß er außerdem eine Umfangsdichtung (34) umfaßt, die zwischen der Oberkante (50) des Gehäuses des besagten Getriebemotors und der Verschlußplatte (3) angeordnet ist und zusammen mit der besagten Erhebung (27a, 27b) zur Führung des Endes des Gelenkzapfens ein einteiliges Element (40) bildet.

9. Getriebemotor nach Anspruch 8, **dadurch gekennzeichnet,** daß das besagte einteilige Element (40) einen ebenen Belag (43) umfaßt, der auf die Achse (5) des Zahnrads (4), in Anlage an der Innenfläche der Verschlußplatte (3), zentriert und so gestaltet ist, daß die am Ende (16) des Stifts (7) angeordnete Oberseite in gleitendem Kontakt mit dem besagten Belag (43) steht.

10. Getriebemotor nach Anspruch 9 , **dadurch gekennzeichnet,** daß der besagte Belag (43) zwei zum Innern des besagten Gehäuses (2) vorstehende Erhebungen (44, 45) in Form von auf die Achse (5) des Zahnrads zentrierten konzentrischen Kreisen umfaßt, die so gestaltet sind, daß das Ende (16) des Stifts (7) während der ganzen Kreisbewegung des Stifts (7) um die besagte Achse (5) zwischen den besagten Erhebungen eingespannt gehalten wird.
